# EUROPEAN PATENT SPECIFICATION

(11) **EP 2 029 430 B1**
(45) Date of publication and mention of the grant of the patent: **18.08.2010**
(21) Application number: 07705400.5
(22) Date of filing: 13.02.2007
(51) Int. Cl.: B64F 1/28, F02B 43/00

(54) **REGENERATION OF KEROSENE VAPOURS AT AIRPORTS AND ENERGY RECOVERY FROM VOC EMISSIONS AREA OF APPLICATION**
REGENERATION VON KEROSINDÄMPFEN AN FLUGHÄFEN UND ENERGIERÜCKGEWINNUNG VON EMISSIONEN VON FLÜCHTIGEN ORGANISCHEN VERBINDUNGEN
RÉGÉNÉRATION DE VAPEURS DE KÉROSÈNE DANS LES AÉROPORTS ET RÉCUPÉRATION D'ÉNERGIE À PARTIR DE LA ZONE D'APPLICATION D'ÉMISSIONS DE VOC

(30) Priority: 30.05.2006 HR 20060195
(43) Date of publication of application: 04.03.2009
(73) Proprietor: Habus, Zvonko, 10000 Zagreb (HR)
(72) Inventor: Habus, Zvonko, 10000 Zagreb (HR)
(74) Representative: Graf Glück Habersack Kritzenberger
(86) International application number: PCT/HR2007/000005
(87) International publication number: WO 2007/138366

(56) References cited:
- WO-A-02/28714
- WO-A-2005/008031
- GB-A- 872 205
- GB-A- 2 179 640
- US-A- 6 095 101

## Description

The Invention can be classified within the following areas:
- Environmental protection and energy efficiency
- Transportation and storage of petroleum and petroleum derivatives
- Alternative energy sources
- Implementation of the Energy Saving Act (32 million quotations on web)
- Implementation of European Parliament and Council Directive 94/ 63 EC of 20 December 1994 on the control of volatile organic compound (VOC) emissions resulting from the storage of petrol and its distribution from terminals to service stations
- Implementation of Regulation (EC) No 1882/2003 of the European Parliament and of the Council; Implementation of EPA/USA Standard

### (Clean Air Act US/EPA)

### THE TECHNICAL PROBLEM

This Invention addresses the technical problem of reducing emissions of volatile organic compounds (VOC) resulting from:
- kerosene storage at airport terminals,
- loading onto special airport road tankers for fuel transportation to airplanes, and
- loading of kerosene onto aircraft fuel tanks

### PRIOR ART

**1. Jet fuel** (also referred to as kerosene) is loaded by means of a special coupling from road tankers on the gantry onto the fuel tanks in the aircraft wings. During the off-loading of fuel (kerosene) from mobile containers onto the planes (fuel tanks), kerosene vapours are released into the air through vents in the wings.

Due to a high sensitivity of the fuel tanks in the aircraft wing, no overpressure or sub-pressure is allowed, so that air with VOC content is released out into the atmosphere from the wings.

The volume of fuel filling and emissions of excess gases from the wings depends on the type of the aircraft and ranges from 20 to 200 m3 per filling. Transatlantic 4-engine passenger jets depart filled with 180 tons or 200 m3 of fuel.
**2. Empty road tankers** after discharging fuel into the planes get to the terminal to reload fuel from storage installations in the fuel loading station.
**3. The problem of odour-intense kerosene gases** in passenger buildings is addressed by installing expensive activated carbon filters in the air conditioning and ventilation suction lines of airport buildings.
**4. Large airports** (London, Frankfurt, Chicago, New York, Washington...) have over 1,500 daily take-offs, or one in every minute.

The quantity of loaded fuel per take-off depends on various factors, but at large airports with transatlantic and continental departure flights the average quantity of loaded fuel amounts to 100 m3 per plane, which, given a take-off every minute, means 150,000 m3 fuel loaded a day.

GB 872 205 A discloses the regeneration of kerosene vapours at airports, wherein the kerosene vapours occurring during fuel loading onto the aircraft are collected in road tankers and airport containers by a closed system using API couplings for return to the gas storage terminal.

### ECONOMIC LOSS ANALYSIS

Below is an estimate of fuel avpour loss at major airports based on two models.

### Model 1

### /Estimate of VOC emissions at a major airport/

### Based on WOGA study: Marine petroleum loading

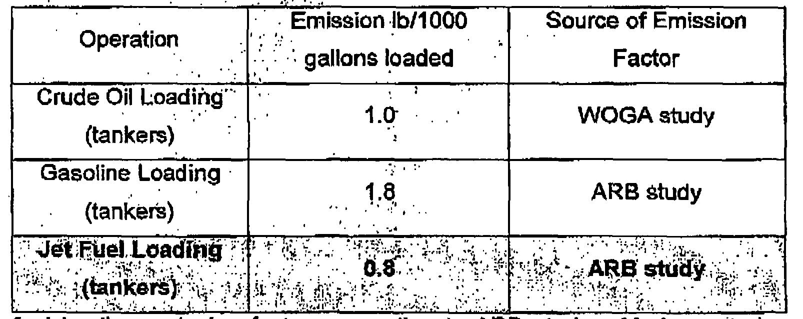

Jet fuel loading emission factors according to ARB study - Marine petroleum loading Tankers & Barges; Emission inventory source category 330-366-1600-0000 (46573) - are as follows: **0.8 lb per 1000 gallons/loading, totalling 1.6 lb per 1000 gallons/loading.**

### Explanation:

Most airports still do not have a system in place for vapour collection from jet fuel road tankers according to Council Directive 94/63/EC of 20 December 1994 on the control of volatile organic compound (VOC) emissions resulting from the storage of petrol and its distribution from terminals to service stations. ANNEX IV SPECIFICATIONS FOR BOTTOM-LOADING, VAPOUR COLLECTION AND OVERFILL PROTECTION OF EUROPEAN ROAD TANKERS

Taken for calculation are emissions resulting from loading onto road tankers at fuel terminals and emissions from aircraft fuel tanks, i.e.: 2x0.8 Ib per 1000 gallons or 1.6 lb per 1000 gallons of fuel loaded onto the aircraft:
1000 gallons x 3.785 l = **3.385 m3** of fuel loaded onto the aircraft
1 lb = 0.4536 kg,
1.6 lb = **emissions 0.725 kg of fuel/3.385 m3**
One take-off loading is 100 m3 on the average
Gallon/m3/g emission estimate factor: 100:3.385 = 29.54x 0.725 kg =21.42 kg

### Emission per one loading is 24.42 kg of fuel

Daily number of take-offs 1500 x 24.42 kg
so **daily fuel emission is 36.630 kg**
Annual fuel loading: 365 x 36.63 tons = 13,370 tons

### Annual fuel emissions at large airports amount to 13,370 tons

**At a price of $700/ton the annual loss resulting from uncontrolled emissions amounts to $9,358,965.**

### Model 2

### /Emission inventory according to the USEPA Emission Inventory Improvement Programme/

Source: USEPA Emission Inventory Improvement Programme - Volume III, Chapter 1998

| Cargo | Large vessel loading (mg/L) | Barge loading (mg/L) | Ballasting (mg/L) | Transit (mg/week/L) |
|---|---|---|---|---|
| Crude oil | 73 | 12 | 13 | 15 |
| Jet naphtha/other | 60 | 14 | ND | 84 |
| Distillate | 0.60 | 1.44 | ND | 0.60 |
| Oil/Kerosene/residual oil | 0.00 | 0.01 | ND | 0.00 |

### a ) VOC emissions exclude ethane and methane

Input data:

| | |
|---|---|
| Barge loading with kerosene | 144 g/m3 |
| Kerosene unloading from barge onto plane | 144 g/m3 |
| Emissions per 1/m3 of loaded kerosene | 0,288 gram |
| Daily number of loadings: | 1500 x 100 m3 |
| Daily emissions: 150,000 m3 x 0.288 kg= 43.2 tons | |

**Total annual emissions: 365x43-2 = 15,768 tons of kerosene**
*Ekgy,NMVOC = NMVOC emissions from kerosene cargo loading, in kg*/*yr*
*EFNMVOC = emission factor for kerosene loading, in kg*/*m3* ***(0.288 kg*/*m3)***
*V = quantity of product loaded, m3*/*yr*
*(365x1500x100= 54,750,000 m3*/*yr)*
***Ekgy,NMVOC = 0.288 x 54,750,000 =15.768,000 kg***
*Ekgy,NMVOC = 15,768 tons*/*yr*

### Annual kerosene emissions at major airports according to USEPA Emission Inventory Improvement Programme amount to 15,768 tons

**At a price of $700/ton the annual loss resulting from VOC emissions from jet fuel at major airports amounts to $11,030,600**

Known VOC recovery technologies:
* Adsorption
* Cryogenic condensation
* Thermal oxidation
* Membrane-based separation
* Fluidized bed absorption

*These technologies involve recovery of the required of solvent vapours and, at big energy cost, condensate. The mentioned technologies do not address the problem of condensates (volatile, inflammable and toxic compounds), it is taken for granted that they are returned for reuse*.

*Apart from the problem of having to invest about 3 KW energy for fuel regeneration from vapours (VOC recovery) of 1 KW energy value, there is also the problem of high quality fuel requirements for aviation jet or turbine engines.*

*No reputable airline company to admit into its plane a ridestillate after fuel vapour return, so such regenerated fuel is of minor value anyway.*

*For that reason on airport installations no applications are known of the existing patent rights, and no such data can be found on the websites of leading world air carriers which are installing VOC emission reduction systems*.

Maximum loading capacities of some types of aircraft:

| | | |
|---|---|---|
| 1. BOEING 777-300 | 171 m3 | 137 tons |
| 2. BOEING 747- 400 | 241 m3 | 193 tons |
| 3. BOEING 747-100 | 183 m3 | 145 tons |
| 4. BOEING 767-200 | 156m3 | 125 tons |
| 5. BOEING 767-400 | 90 m3 | 72 tons |

### CONCLUSION

Annual fuel emissions at major airports estimated according to the USEPA Emission Inventory Improvement Programme has the energy value calculated on the basis of the fact that 0.1 kg of liquid fuel yields 1kW energy: 15,768,000 kg x 10 kWh=157,680,000 kWh or 157 GWh electrical energy.

This amount of power satisfies and even exceeds the needs of an airport.

### THE ESSENCE OF THE INVENTION

Kerosene VOC emissions resulting from fuel loading onto the aircraft should be (pursuant to European Parliament and Council Directive 94/63 EC of 20 December 1994, Regulation (EC) No 1882/2003 of the European Parliament and of the Council of 29 September 2003, the US EPA Clean Air Act, and the Energy Saving Act) should be captured in a closed system by using API 1004 couplings on motor vehicle fuel tanks and aircraft tanks (places of vents).

The couplings may be adapted to other standard connections if so agreed between state parties to the International Civil Aviation (ICAO) and the Federal Aviation Regulations (FAR).

Due to highly complex installations and arrangement of auxiliary fuel tanks, a solution will be considered satisfactory if only the main kerosene tanks are fitted with appropriate couplings for extraction and capture of gases resulting fromfuel loading.

Regeneration of kerosene vapours at airports and energy recovery from VOC emissions are shown in the attached illustrations:

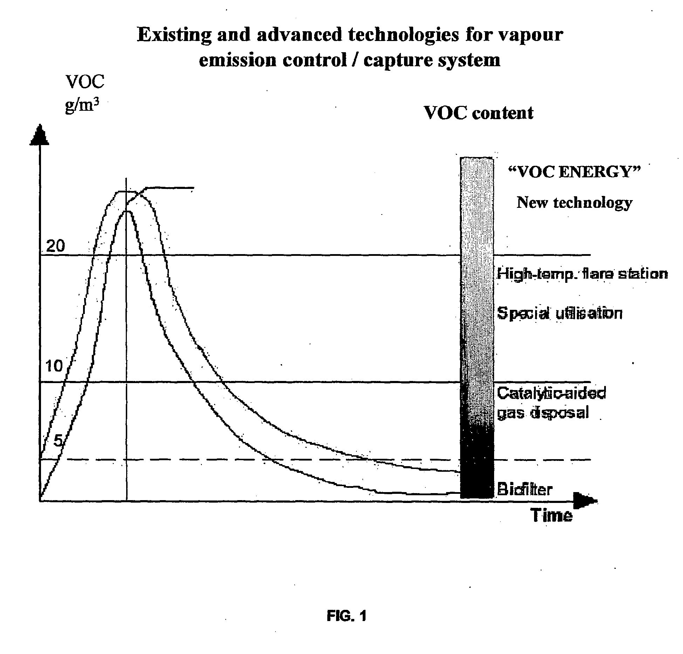

Fig. 1 - VOC concentrations in waste atmosphere and recommended purification technologies;

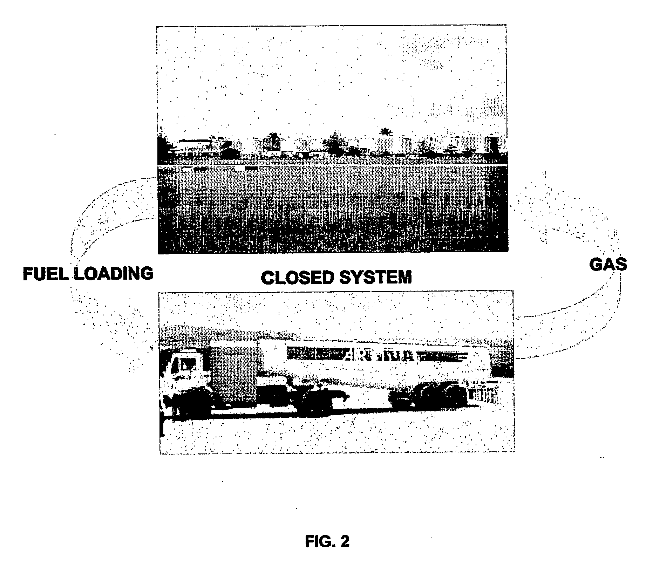

Fig. 2 - graphic representation of a closed system - kerosene loading from the terminal containers onto road tankers and return of gases to the terminal gas storage;

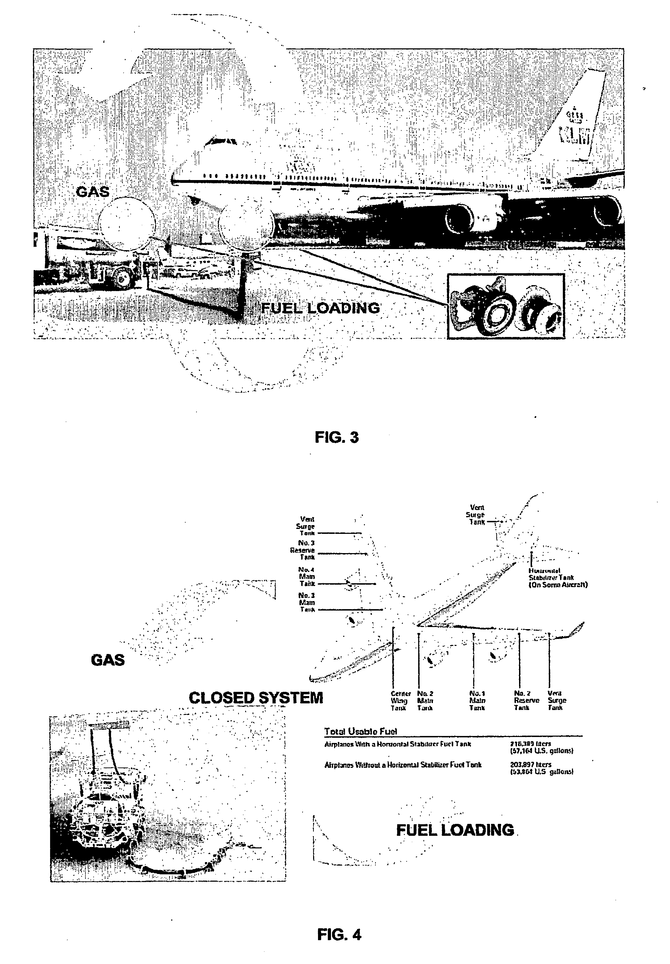

Fig. 3 - kerosene loading from road tankers onto the aircraft;
Fig. 4 - graphic representation of a closed system - kerosene loading from road tankers onto the aircraft and return of gases onto the vehicle;

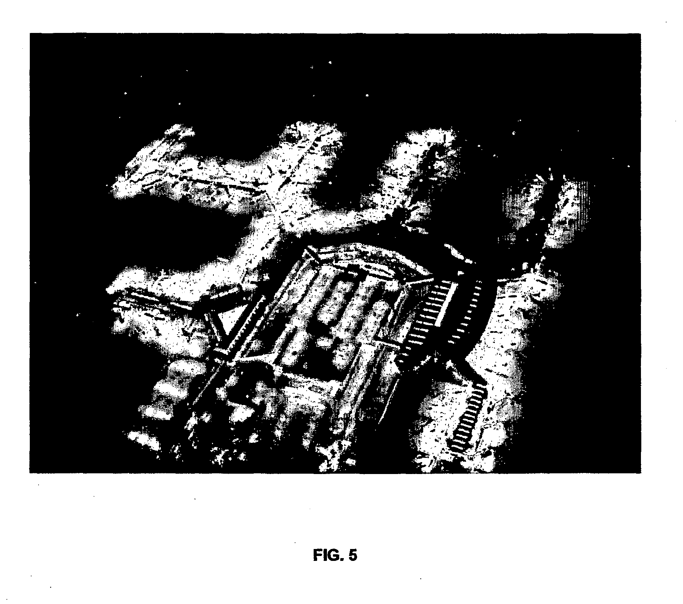

Fig. 5 - airport at night (electricity consumption).

During kerosene loading from the terminal containers onto road tankers gases are captured and filled onto the terminal gas storage on the airport.

After bringing fuel to the apron and before loading onto the aircraft fuel tanks, the special road tanker attaches the API 1004 coupling to the corresponding fuel loading coupling on the vehicle, then connects the API 1004 coupling to the aircraft tank vent and the discharge line with API 1004 coupling to the fuel-filled vehicle from the upper side.

During fuel loading onto the aircraft tanks, vapours from the aircraft tanks are captured and stored in the road tankers.

It is understood that the gas connection is fitted with a finely adjusted overpressure vent valve in case of a need for relief of impermissible overpressure in the aircraft tank.

Upon completed fuel loading onto the aircraft tanks, the valves are closed and the road tanker leaves with stored vapours for refilling and off-loading into the terminal gas storage: from here the vapours are transferred to the generating set (P 20050481 A) for electricity production and supply. The value of supplied energy in an ideal case for major airports is estimated at $10 million a year or 157 GWh/yr.

### Definitions for the purpose of this patent application:

- **"kerosene"** shall mean any petroleum derivative, with or without additives, having a reid vapour pressure of 27.6 kilopascals or more, which is intended for use as a fuel for motor vehicles and airplanes, except liquefied petroleum gas (LPG);
- **"vapours"** shall mean any gaseous compound which evaporates from petrol and kerosene;
- **"storage installation"** shall mean any stationary tank at a terminal used for the storage of petrol;
- **"terminal"** shall mean any facility which is used for the storage and loading of petrol onto road tankers, rail tankers, or vessels, including all storage installations on the site of the facility;
- **"mobile container"** shall mean any tank, transported by road, rail or waterways used for the transfer of petrol from one terminal to another or from a terminal to a service station;
- **"service station"** shall mean any installation where petrol is dispensed to motor vehicle fuel tanks from stationary storage tanks;
- **"existing"** petrol storage installations, loading installations, service stations and mobile containers shall mean such installations, service stations and mobile containers which were in operation before the date referred to in Article 10 or for which an individual construction licence or operating licence, where required under national legislation, was granted before the date referred to in Article 10;
- **"new"** in relation to petrol storage installations, loading installations, service stations and mobile containers shall mean such installations, service stations and mobile containers which are not covered by the existing installations;
- **"throughput"** shall mean in calculations the largest total annual quantity of kerosene or petrol loaded from a storage installation at a terminal or from a service station into mobile containers during the three preceding years;
- **"VOC recovery unit"** shall mean equipment for the recovery of kerosene and petrol from vapours including any outdated reservoir systems at a terminal, if existing;
- **"vessel"** shall mean an inland waterway vessel as defined in Chapter 1 of Council Directive 82/714/EEC of 4 October 1982 laying down technical requirements for inland waterway vessels (1);
- **"target reference value"** shall mean the guideline given for the overall assessment of the adequacy of technical measures in the Annexes and is not a limit value against which the performance of individual installations, terminals and service stations will be measured;
- **"intermediate storage of vapours"** shall mean the storage of vapours in a fixed roof tank at a terminal for later transfer to and recovery at another terminal. (in this patent application at the **P 20050481 A** installation).
- **"loading installation"** shall mean any facility at a terminal at which kerosene or petrol can be loaded onto mobile containers. Loading installations for road tankers comprise one or more 'gantries';
- **"gantry"** shall mean any structure at a terminal at which kerosene and petrol can be loaded onto a single road tanker at any one time.

## Claims

1. Method of regeneration of kerosene vapours at airports, wherein the kerosene vapours occurring during fuel loading onto the aircraft are collected in road tankers and airport containers by a closed system using couplings for return to the gas storage terminal, **characterized in that** energy recovery from volatile organic compound emissions is effected by means of a diesel engine connected to a generator in order to use their energy value in electricity generation.

2. Method according to Claim 1, **characterized in that** the storage of kerosene vapours at terminals requires the installation of gas storage facilities and piping and fittings.

3. Method according to Claims 1 and 2, **characterized in that** the emissions of kerosene and petroleum derivatives above 40 g/m³ are directly used for motor propulsion and electricity generation with possible addition of atmospheric air.

4. Method according to Claim 1, **characterized in that** vapour emissions with kerosene and petrol content below 40 g/m³ are used, but with addition of methane CH₄ or liquefied petroleum gas C3 - C4, which does hot diminish the energy efficiency of utilizing waste gases.

## Patentansprüche

1. Verfahren zur Regeneration von Kerosindämpfen an Flughäfen, wobei die während des Betankens eines Flugzeugs auftretenden Kerosindämpfe durch ein geschlossenes System unter Verwendung von Kupplungen zur Rückführung zum Gaslager-Terminal in Tanklastern und Flughafen-Containern gesammelt werden, **dadurch gekennzeichnet, dass** die Energierückgewinnung von Emissionen flüchtiger organischer Verbindungen durch einen mit einem Generator verbundenen Dieselmotor erfolgt, um den Energieinhalt der Emissionen zur Erzeugung von elektrischen Strom zu nutzen.

2. Verfahren nach Anspruch 1, **dadurch gekennzeichnet, dass** die Lagerung von Kerosindämpfen an Terminals eine Installation von Einrichtungen zur Gaslagerung sowie ein Rohrleitungsnetz und Verschraubungen erfordert.

3. Verfahren nach Anspruch 1 oder 2, **dadurch gekennzeichnet, dass** die Emissionen von Kerosin und Mineralöl-Derivaten über 40 g/m³ direkt zum Motorenantrieb und zur Stromerzeugung genutzt werden, wobei optional ein Zusatz von Außenluft erfolgt.

4. Verfahren nach Anspruch 1, **dadurch gekennzeichnet, dass** Dampfemissionen mit einem Kerosin- und Kraftstoffgehalt unter 40 g/m³ verwendet werden, wobei aber ein Zusatz von Methan CH₄ oder verflüssigtem Erdgas C3 - C4 erfolgt, der die Energieeffizienz der Verwertung von Gasabfällen nicht vermindert.

## Revendications

1. Méthode de régénération de vapeurs de kérosène dans les aéroports, dans laquelle les vapeurs de kérosène générées durant l'avitaillement des avions sont collectées dans camions-citernes ou dans des conteneurs d'aéroports par un système fermé utilisant des raccords pour les renvoyer au terminal de stockage des gaz, **caractérisé en ce que** la récupération de l'énergie des émissions des composés organiques volatils est effectué au moyen d'un moteur diesel connecté à un générateur de façon à utiliser leur valeurs énergétiques pour générer de l'électricité.

2. Méthode selon la revendication 1, **caractérisée en ce que** le stockage des vapeurs de kérosène aux terminaux requiert l'installation d'aménagements pour le stockage des gaz, de tubulures et de raccordements.

3. Méthode selon la revendication 1 ou 2, **caractérisée en ce que** les émissions de kérosène et des dérivés du pétrole au dessus de 40g/m³ sont directement utilisées pour la propulsion du moteur et la génération électrique avec une addition éventuelle d'air atmosphérique.

4. Méthode selon la revendication 1, **caractérisée en ce que** les émissions de kérosène et des dérivés du pétrole au dessous de 40g/m³ sont utilisées avec addition de méthane CH₄ ou de gaz de pétrole liquéfiés C3-C4, qui ne diminuent pas le rendement énergétique des gaz de récupération utilisés.
